# FASCICULE DE BREVET EUROPEEN

(11) **EP 1 980 753 B1**
(45) Date de publication et mention de la délivrance du brevet: **09.12.2009**
(21) Numéro de dépôt: 08075204.1
(22) Date de dépôt: 25.03.2008
(51) Int. Cl.: F04D 19/02

(54) **Aube de soufflante**
Leitschaufel eines Gebläses
Fan vane

(30) Priorité: 13.04.2007 FR 0702682
(43) Date de publication de la demande: 15.10.2008
(73) Titulaire: Snecma, 75015 Paris (FR)
(72) Inventeur: Belmonte, Olivier, 77176 Savigny le Temple (FR); M'Bengue, Amadou Lamine, 77240 Vert Saint Denis (FR)
(74) Mandataire: Nguyen, Dominique

(56) Documents cités:
- EP-A- 1 624 169
- EP-A2- 1 201 878
- GB-A- 460 781

## Description

La présente invention concerne le domaine des aubes, en particulier de soufflante, destinées aux turboréacteurs notamment de type aéronautique.

Un turboréacteur comporte classiquement un compresseur, une chambre de combustion et une turbine. Le rôle du compresseur est d'accroître la pression de l'air fourni à la chambre de combustion. Le rôle de la turbine est d'assurer l'entraînement en rotation du compresseur en prélevant une partie de l'énergie de pression des gaz chauds sortant de la chambre de combustion et en la transformant en énergie mécanique.

Un turboréacteur peut être du type « à double flux », c'est-à-dire qu'il est traversé par deux flux d'air, un flux primaire et un flux secondaire. Le flux primaire est produit par des éléments constitutifs d'un turboréacteur simple flux auxquels une ou plusieurs turbines supplémentaires sont ajoutées afin d'entraîner un étage de compression, la soufflante. Celle-ci est équipée d'aubes de grande dimension, les aubes de soufflante, produisant le flux secondaire. La soufflante augmente faiblement la pression des gaz la traversant, mais comme son diamètre est grand, l'énergie produite pour la poussée est élevée.

Un tel turboréacteur a été décrit dans les documents EP 1 201 878 et EP 1 624 169, qui sont considérés comme l'état de la technique le plus proche.

Un exemple de turboréacteur à soufflante, aussi appelé turbosoufflante, bien connu est le CFM56 équipant de nombreux avions dans le monde depuis plusieurs décennies. Les séries successives du CFM56 ont vu leurs nombres d'aubes de soufflante décroître progressivement.

La diminution du nombre d'aubes sur un turboréacteur est avantageuse en ce qu'elle permet une diminution significative de la masse du turboréacteur ainsi qu'une diminution des coûts d'acquisition et de maintenance. Cette diminution du nombre d'aubes ne doit cependant pas s'effectuer au détriment des performances du turboréacteur. De préférence, on évite d'augmenter la valeur de la corde des aubes afin de limiter l'encombrement du turboréacteur, et ainsi sa masse.

La diminution progressive du nombre d'aubes implique une augmentation du pas relatif (en anglais : « pitch to chord ratio ») ainsi qu'une augmentation, à corde constante, de la distance inter-aubes, c'est-à-dire de la distance séparant deux aubes consécutives.

Le pas relatif est défini selon le rapport s/C où :
- s représente le pas inter-aubes (s = 2.Π.R / N), N étant le nombre d'aubes sur une roue aubagée, et
- C représente la corde du profil au rayon R considéré sur la hauteur d'une aube, la corde C représentant la longueur du segment joignant le bord d'attaque au bord de fuite d'une aube.

La présente invention a pour objectif de fournir une aube de soufflante dont les caractéristiques permettent une diminution du nombre d'aubes de soufflante tout en fournissant des performances satisfaisantes.

A cet effet, la présente invention concerne une aube de soufflante de turboréacteur à double flux caractérisée en ce qu'elle comporte une pluralité de parties aérodynamiques superposées selon une direction radiale Z et en ce que le nombre de profils aérodynamiques évolue d'une partie aérodynamique à l'autre.

Une partie aérodynamique possède des propriétés aérodynamiques conférées par au moins un profil aérodynamique, chaque profil aérodynamique comportant un extrados, un intrados, un bord d'attaque et un bord de fuite.

La direction radiale Z correspond à la direction essentiellement longitudinale d'une aube. Elle est usuellement appelée direction radiale par l'homme du métier car cette direction correspond à un rayon partant de l'axe de rotation X du turboréacteur sur lequel ladite aube est habituellement placée en fonctionnement.

De préférence, l'aube de soufflante selon l'invention comporte une partie aérodynamique inférieure et une partie aérodynamique supérieure superposées selon la direction radiale Z, chaque partie aérodynamique comportant au moins un profil aérodynamique, le nombre de profils aérodynamiques de la partie aérodynamique supérieure étant supérieur au nombre de profils aérodynamiques de la partie aérodynamique inférieure.

Au sens de la présente invention, la partie aérodynamique supérieure désigne la partie de l'aube la plus éloignée de l'axe de rotation X du turboréacteur sur lequel ladite aube est habituellement placée en fonctionnement et la partie aérodynamique inférieure désigne la partie de l'aube la plus proche de l'axe de rotation X du turboréacteur.

De préférence, la partie aérodynamique inférieure comporte un unique profil aérodynamique, et la partie aérodynamique supérieure comporte au moins deux profils aérodynamiques.

De préférence, les profils aérodynamiques d'une même partie aérodynamique sont identiques

L'aube de soufflante selon l'invention peut en outre comporter une plate-forme séparant la partie aérodynamique inférieure et la partie aérodynamique supérieure. Cette plate-forme peut constituer un bec de séparation de flux, en particulier pour séparer le flux primaire et le flux secondaire dans un turboréacteur à double flux.

L'invention concerne également un turboréacteur comportant au moins une aube de soufflante fixée, soit par son extrémité inférieure à un moyeu, soit par ses extrémités supérieures à un carter tournant.

D'autres avantages et caractéristiques de l'invention ressortiront à la lecture de la description détaillée qui suit en référence aux figures annexées, fournies à titre d'exemples non limitatifs, sur lesquelles :
- la figure 1 représente une vue de face d'aubes de soufflante selon l'invention disposées sur un moyeu ;
- la figure 2 représente une vue en perspective d'aubes de soufflante selon l'invention disposées sur un moyeu ;
- la figure 3 représente une vue de profil d'une aube de soufflante selon un premier mode de réalisation de l'invention ; et
- la figure 4 représente une vue de profil d'une aube de soufflante selon un seconde mode de réalisation de l'invention.

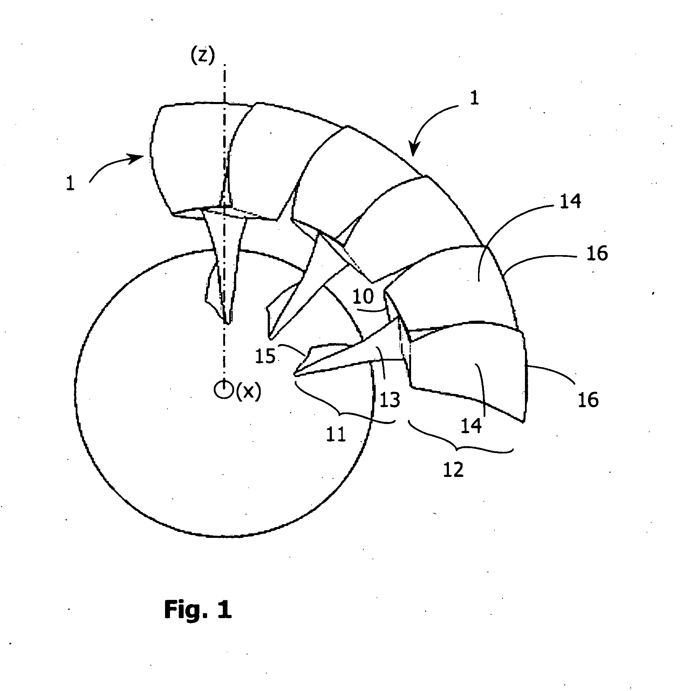

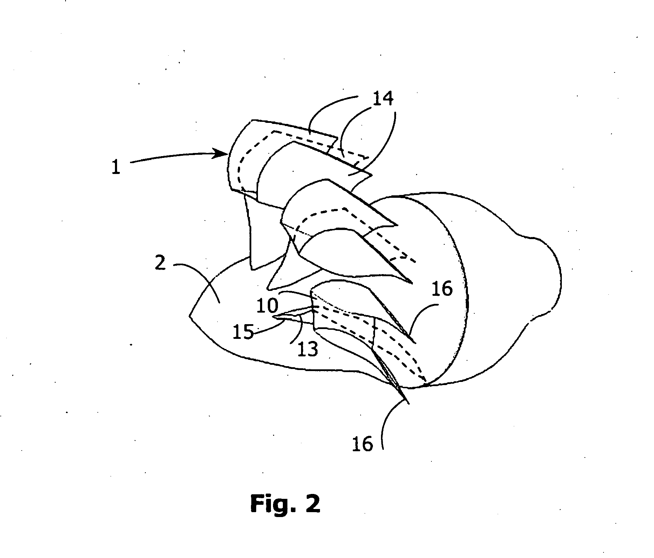

Les figures 1 et 2 représentent trois aubes de soufflante 1 conformes à l'invention disposées sur un moyeu 2 d'axe de révolution X. L'axe de révolution X du moyeu 2 est confondu avec l'axe de rotation X du turboréacteur.

L'aube de soufflante 1 selon l'invention, s'étendant radialement à partir de l'axe X, comporte une partie aérodynamique inférieure 11 et une partie aérodynamique supérieure 12. La partie aérodynamique inférieure 11 est constituée d'un profil aérodynamique.

Dans l'exemple illustré par les figures 1 et 2, la partie aérodynamique supérieure 12 de l'aube de soufflante 1 comporte deux profils aérodynamiques 14. Des variantes de l'invention avec une aube de soufflante 1 comportant plus de deux profils aérodynamiques 14 sont également envisageables. Une aube de soufflante 1 comportant trois profils aérodynamiques 14 est également avantageuse. Une telle aube est représentée en pointillé sur la figure 2. Ces profils aérodynamiques 14 sont de préférence identiques et orientées radialement.

Lorsque la partie aérodynamique supérieure 12 de l'aube de soufflante 1 comporte au moins deux profils aérodynamiques, le nombre d'aubes augmente ce qui réduit sensiblement le pas relatif sur la partie aérodynamique supérieure 12 de l'aube. Le pas relatif en extrémité supérieure 16 de l'aube de soufflante 1 possède donc des valeurs plus limitées pour lequel le taux de compression est satisfaisant.

En conservant un pas relatif plus élevé sur la partie aérodynamique inférieure 11 de l'aube de soufflante, on se prémunit d'éventuels problèmes de blocage aérodynamique qui surviennent lorsqu'il devient difficile d'assurer un débit suffisant pour le flux primaire.

Une plate-forme 10 sépare la partie aérodynamique inférieure 11 et la partie aérodynamique supérieure 12 de l'aube de soufflante 1. Cette plate-forme 10 permet de raccorder l'extrémité supérieure du profil aérodynamique 13 aux extrémités inférieures des deux autres profils aérodynamiques 14. Afin de perturber le moins possible l'écoulement des flux primaire et secondaire, cette plate-forme 10 doit se situer à la hauteur de l'aube de soufflante 1 où les flux primaire et secondaire se forment. De préférence, elle constitue elle-même un bec de séparation des flux primaire et secondaire.

De préférence, la plate-forme 10 possède une forme aérodynamique afin de guider l'écoulement d'air auquel elle est susceptible d'être soumise.

La plate-forme 10 peut également être du type jointive, c'est-à-dire qu'elle comporte une forme susceptible d'épouser la forme complémentaire et identique d'une plate-forme 10 voisine lorsque les aubes de soufflante 1 dont elles dépendent sont dûment placées sur un moyeu 2.

Selon un premier mode de réalisation, représenté sur la figure 6, l'aube de soufflante 1 est fixée par son extrémité inférieure 15 au moyeu 2, ses extrémités supérieures 16 étant libres. La fixation peut s'effectuer selon des techniques connue de l'homme du métier telles que, par exemple, la coopération entre un tenon, situé en extrémité inférieure 15, glissant dans une rainure du moyeu 2.

Avantageusement, l'encombrement axial des profils aérodynamiques 13 et 14 peut être sensiblement identique, par exemple au niveau de leur jonction mutuelle. Ainsi, par exemple, au niveau de la plate-forme 10, l'encombrement axial d'un profil aérodynamique 13 est identique à l'encombrement axial d'un profil aérodynamique 14. Par conséquent, au niveau de la plate-forme 10, les bords d'attaque des profils aérodynamiques 13 et 14 sont alignés axialement. De même, au niveau de la plate-forme 10, les bords de fuite des profils aérodynamiques 13 et 14 sont également alignés axialement.

Dans ce premier mode de réalisation, l'aube de soufflante 1 est classiquement soumise à des contraintes de traction selon une direction radiale Z par rapport à l'axe X du moyeu 2.

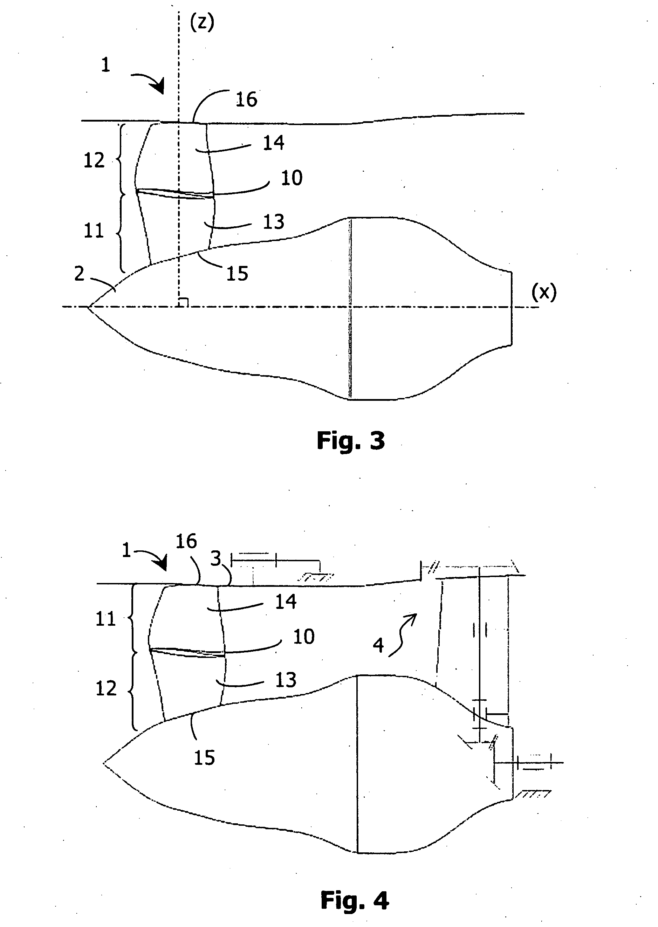

Selon un second mode de réalisation, représenté sur la figure 4, l'aube de soufflante 1 est fixée par chacune de ses extrémités supérieures 16 à un carter tournant 3 d'axe X, son extrémité inférieure 15 pouvant être libre. Le carter tournant 3 se présente sous la forme d'une virole entourant la soufflante et solidaire de celle-ci. L'ensemble constitué par le carter tournant 3 et les aubes de soufflante 1 est susceptible d'être mis en rotation selon l'axe X. L'entraînement en rotation de l'ensemble s'effectue par un système d'engrenages 4 reliant mécaniquement le carter tournant 3 à la turbine du turboréacteur.

Ce second mode de réalisation a également pour but de supprimer le jeu situé entre les aubes et le carter 3 les entourant.

Dans ce second mode de réalisation, l'aube de soufflante 1 est soumise à des contraintes de compression. Cette configuration est avantageuse puisqu'une pièce mécanique supporte mieux les contraintes de compression que les contraintes de traction.

En outre, la forme particulière de l'aube de soufflante 1 selon l'invention contribue à sa bonne tenue mécanique. Lors de la rotation de la soufflante, les forces centrifuges poussent le profil aérodynamique 13 et la plate-forme 10 radialement vers l'extérieur en direction du carter tournant 3. Les contraintes exercées par ces pièces 10 et 13 sont avantageusement réparties sur les deux profils aérodynamiques 14 de la partie aérodynamique supérieure 12 de l'aube de soufflante 1. Le risque de flambage de l'aube de soufflante 1, c'est-à-dire la déformation latérale dû à un effort normal de compression, est donc réduit.

La fixation par la partie aérodynamique supérieure 16 d'une aube de soufflante 1 présente également des avantages en terme de rendement du turboréacteur puisque le jeu entre l'extrémité supérieure 16 d'une aube de soufflante 1 et le carter tournant 3 devient inexistant. Ainsi, la perte de rendement due à ce jeu dans les turboréacteurs de conception plus classique disparaît.

En outre, ce type de fixation permet avantageusement de réduire la masse du turboréacteur en diminuant le rapport de moyeu Ri/Re, c'est-à-dire le rapport entre le rayon intérieur Ri et le rayon extérieur Re, Ri étant la distance du point sur le bord d'attaque de l'aube 1 le plus proche de l'axe (X) du turboréacteur et Re étant la distance du point sur le bord d'attaque de l'aube 1 le plus éloigné dudit axe (X). Puisque le moyeu 2 ne sert plus, dans ce second mode de réalisation, à fixer les aubes, le rayon intérieur peut être faible voir nul. Dans un cas extrême, le turboréacteur peut ne comporter aucun moyeu 2 au niveau des aubes de soufflante 1. Pour un même rayon extérieur Re, la masse du moyeu 2 peut ainsi être faible voire nulle. La masse du turboréacteur est ainsi réduite.

## Revendications

1. Aube de soufflante de turboréacteur à double flux **caractérisée en ce qu'**elle comporte une partie aérodynamique inférieure (11) et partie aérodynamique supérieure (12) superposées selon une direction radiale (Z), **caractérisée en ce que** la partie aérodynamique inférieure (11) comporte un unique profil aérodynamique (13) et la partie aérodynamique supérieure (12) comporte au moins deux profils aérodynamiques (14).

2. Aube de soufflante selon la revendication 1 **caractérisée en ce que** les profils aérodynamiques (13, 14) d'une même partie aérodynamique (11, 12) sont identiques.

3. Aube de soufflante selon l'une des revendications précédentes **caractérisée en ce qu'**elle comporte une plate-forme (10) séparant la partie aérodynamique inférieure (11) et la partie aérodynamique supérieure (12).

4. Aube de soufflante selon la revendication précédente **caractérisée en ce que** la plate-forme (10) est du type jointive.

5. Aube de soufflante selon la revendication 3 ou 4 **caractérisé en ce que** la plate-forme (10) constitue un bec de séparation de flux.

6. Soufflante comportant une pluralité d'aubes de soufflante (1) selon l'une des revendications précédentes.

7. Turboréacteur comportant une pluralité d'aubes de soufflante (1) selon l'une des revendications 1 à 5.

8. Turboréacteur selon la revendication 7 **caractérisé en ce que** les aubes de soufflante (1) sont fixées par leur extrémité inférieure (15) à un moyeu (2).

9. Turboréacteur selon la revendication 7 **caractérisé en ce que** les aubes de soufflante (1) sont fixées par chacune de leurs extrémités supérieures (16) à un carter tournant (3) du turboréacteur.

10. Turboréacteur selon la revendication précédente **caractérisé en ce que** le carter tournant (3) est relié par un système d'engrenage (4) à une turbine du turboréacteur.

11. Turboréacteur selon la revendication 9 ou 10 **caractérisé en ce qu'**il ne comporte aucun moyeu (2) au niveau des aubes de soufflantes (1).

## Claims

1. Bypass turbojet fan blade, **characterized in that** it comprises a lower aerodynamic part (11) and an upper aerodynamic part (12) which are superposed in a radial direction (Z), and **in that** the lower aerodynamic part (11) has a single aerodynamic profile (13) and the upper aerodynamic part (12) has at least two aerodynamic profiles (14).

2. Fan blade according to Claim 1, **characterized in that** the aerodynamic profiles (13, 14) of the one and the same aerodynamic part (11, 12) are identical.

3. Fan blade according to either of the preceding claims, **characterized in that** it comprises a platform (10) separating the lower aerodynamic part (11) and the upper aerodynamic part (12).

4. Fan blade according to the preceding claim, **characterized in that** the platform (10) is of the contiguous type.

5. Fan blade according to Claim 3 or 4, **characterized in that** the platform (10) constitutes an air splitter.

6. Fan comprising a plurality of fan blades (1) according to one of the preceding claims.

7. Turbojet comprising a plurality of fan blades (1) according to one of Claims 1 to 5.

8. Turbojet according to Claim 7, **characterized in that** the fan blades (1) are fixed by their lower end (15) to a hub (2).

9. Turbojet according to Claim 7, **characterized in that** the fan blades (1) are fixed by each of their upper ends (16) to a rotary casing (3) of the turbojet.

10. Turbojet according to the preceding claim, **characterized in that** the rotary casing (3) is connected by a system of gears (4) to a turbine of the turbojet.

11. Turbojet according to Claim 9 or 10, **characterized in that** it has no hub (2) for the fan blades (1).

## Patentansprüche

1. Gebläseschaufel eines Doppelstrom-Turbotriebwerks, **dadurch gekennzeichnet, dass** sie einen unteren aerodynamischen Teil (11) und einen oberen aerodynamischen Teil (12) aufweist, die in einer radialen Richtung (Z) übereinander angeordnet sind, und dass der untere aerodynamische Teil (11) ein einziges aerodynamisches Profil (13) und der obere aerodynamische Teil (12) mindestens zwei aerodynamische Profile (14) aufweist.

2. Gebläseschaufel nach Anspruch 1, **dadurch gekennzeichnet, dass** die aerodynamischen Profile (13, 14) des gleichen aerodynamischen Teils (11, 12) gleich sind.

3. Gebläseschaufel nach einem der vorhergehenden Ansprüche, **dadurch gekennzeichnet, dass** sie eine Plattform (10) aufweist, die den unteren aerodynamischen Teil (11) und den oberen aerodynamischen Teil (12) trennt.

4. Gebläseschaufel nach dem vorhergehenden Anspruch, **dadurch gekennzeichnet, dass** die Plattform (10) vom aneinanderstoßenden Typ ist.

5. Gebläseschaufel nach Anspruch 3 oder 4, **dadurch gekennzeichnet, dass** die Plattform (10) einen Stromtrennschnabel bildet.

6. Gebläse, das mehrere Gebläseschaufeln (1) nach einem der vorhergehenden Ansprüche aufweist.

7. Turbotriebwerk, das mehrere Gebläseschaufeln (1) nach einem der Ansprüche 1 bis 5 aufweist.

8. Turbotriebwerk nach Anspruch 7, **dadurch gekennzeichnet, dass** die Gebläseschaufeln (1) mit ihrem unteren Ende (15) an einer Nabe (2) befestigt sind.

9. Turbotriebwerk nach Anspruch 7, **dadurch gekennzeichnet, dass** die Gebläseschaufeln (1) mit jedem ihrer oberen Enden (16) an einem drehenden Gehäuse (3) des Turbotriebwerks befestigt sind.

10. Turbotriebwerk nach dem vorhergehenden Anspruch, **dadurch gekennzeichnet, dass** das drehende Gehäuse (3) durch ein Zahnantriebssystem (4) mit einer Turbine des Turbotriebwerks verbunden ist.

11. Turbotriebwerk nach Anspruch 9 oder 10, **dadurch gekennzeichnet, dass** es keine Nabe (2) in Höhe der Gebläseschaufeln (1) aufweist.
